# EUROPÄISCHE PATENTSCHRIFT

(11) **EP 1 022 191 B1**
(45) Veröffentlichungstag und Bekanntmachung des Hinweises auf die Patenterteilung: **12.05.2004**
(21) Anmeldenummer: 00101179.0
(22) Anmeldetag: 21.01.2000
(51) Int. Cl.: B60R 1/12, B60R 1/00

(54) **Rückspiegel**
Rear view mirror
Rétroviseur

(30) Priorität: 22.01.1999 DE 19902486; 29.01.1999 DE 19903595
(43) Veröffentlichungstag der Anmeldung: 26.07.2000
(73) Patentinhaber: MEKRA Lang GmbH & Co. KG, 90765 Fürth (DE)
(72) Erfinder: Lang, Heinrich, 91465 Ergersheim (DE); Renner, Christopher, 91472 Ipsheim (DE)
(74) Vertreter: Winter, Brandl, Fürniss, Hübner, Röss, Kaiser, Polte Partnerschaft

(56) Entgegenhaltungen:
- DE-A- 4 228 794
- PATENT ABSTRACTS OF JAPAN vol. 010, no. 065 (E-388), 14. März 1986 (1986-03-14) & JP 60 214691 A (NAIRUSU BUHIN KK), 26. Oktober 1985 (1985-10-26)
- PATENT ABSTRACTS OF JAPAN vol. 1997, no. 10, 31. Oktober 1997 (1997-10-31) & JP 09 150670 A (SONY CORP), 10. Juni 1997 (1997-06-10)
- PATENT ABSTRACTS OF JAPAN vol. 018, no. 083 (M-1558), 10. Februar 1994 (1994-02-10) & JP 05 294183 A (CANON INC), 9. November 1993 (1993-11-09)

## Beschreibung

Die Erfindung betrifft einen Rückspiegel, insbesondere für Kraftfahrzeuge, nach dem Oberbegriff des Anspruchs 1.

Kraftfahrzeuge mit Rückspiegeln auszustatten, ist seit langer Zeit allgemein übliche Praxis. Speziell die Fahrer von Lastkraftwagen oder anderen Kraftfahrzeugen mit nach hinten stark eingeschränktem oder gar nicht zur Verfügung stehendem Sichtfeld sind speziell beim Rückwartsfahren oder -rangieren auf den oder die Außenrückspiegel angewiesen, um das Fahrzeug sicher rangieren zu können. In der Praxis ist hierbei oft ein einzelner Spiegel mit einer einzigen Spiegelfläche oder Spiegelscheibe nicht ausreichend, auch wenn je ein einzelner Spiegel links und rechts, d.h. auf der Fahrer- und Beifahrerseite angeordnet ist. Ein einzelner Spiegel ist nämlich in der Mehrzahl der Fälle nicht in der Lage, alle für den Fahrer wichtigen Zonen seitlich und/oder hinter dem Fahrzeug wiederzugeben. Es ist daher bekannt, seitlich an dem Fahrzeug mehrere Spiegel mit unterschiedlichen Einstellwinkeln anzuordnen, um dem Fahrer ein möglichst umfassendes Gesichtsfeld zu ermöglichen. Eine derartige Mehrzahl von Außenrückspiegeln ist jedoch aufwendig und teuer, verschlechtert den Luftwiderstandsbeiwert und kann damit den Kraftstoffverbrauch erhöhen, ist bei bestimmten Fahrzeugen, beispielsweise Omnibussen, aus gestalterischen Gründen unerwünscht und mit wachsender Anzahl von Spiegeln und damit Spiegelflachen wächst auch die Wahrscheinlichkeit von Brüchen. Bei einem Fahrerwechsel muß die Mehrzahl von Spiegeln oftmals aufwendig neu eingestellt werden, was ebenfalls unpraktisch ist. Alle Spiegelflächen müssen regelmäßig gereinigt und gegebenenfalls mit einer Heizeinrichtung versehen werden, um stets eine ungehinderte Sicht nach hinten zu haben.

Aus der gattungsgemässe JP-A-05 294 183 ist es bekannt, hinter einem Spiegel eine Kamera oder sonstige Bildaufnahmevorrichtung anzubringen. Der dortige Spiegel ist als Halbspiegel ("half mirror") ausgeführt, d. h. er besteht aus einem reflektierenden Teil und einem voll durchlässigen Teil, der mit der Ausrichtung der Kamera übereinstimmt. Dies führt in der Praxis zu einer erheblichen Beeinträchtigung der reflektierenden Spiegelfläche und irgendwelche Gegenstände, welche sich genau in diesem transparenten Bereich der Spiegelfläche wiederspiegeln sollten, tun dies nicht und können somit vom Fahrer nicht erkannt werden (in etwa vergleichbar mit dem bekannten "toten Winkel" bei üblichen Rückspiegeln).

Die JP-A-60 214 691 zeigt die Anordnung einer Bildaufnahmevorrichtung in einem rückspiegelartigen Gehäuse, wobei das Gehäuse aber letztendlich nur als Schutzgehäuse für die Bildaufnahmevorrichtung dient, jedoch keinen Spiegel trägt.

Im Fall der JP-A-09 150 670 wird eine Kamera am Heck eines Fahrzeuges zusammen mit einer IR-Lampe angebracht.

Die vorliegende Erfindung hat es sich zur Aufgabe gemacht, eine Möglichkeit zu schaffen, eine Bilderfassungsvorrichtung in einem Rückspiegelgehäuse derart anzuordnen, daß diese ohne wesentliche Beeinträchtigung des Reflektions- oder Spiegelungsvermögen der Spiegelfläche gleichwohl durch besagte Spiegelflächen zu einer Bildaufnahme fähig ist.

Zur Lösung dieser Aufgabe schlägt die vorliegende Erfinung gemäß neuem Anspruch 1 einen Rückspiegel, insbesondere für Kraftfahrzeuge vor, mit einer Spiegelscheibe, die eine Spiegleschicht aufweist und wenigstens einer hinter der Spiegelscheibe angeordneten Bildaufnahmevorrichtung, wobei dieser Rückspiegel dadurch gekennzeichnet ist, daß die Spiegelschicht der Spiegelscheibe in einem Bereich vor der Bildaufnahmevorrichtung zumindest teilweise entfernt ist.

Theoretisch könnte die Bilddaufnahmevorrichtung direkt durch die Spiegelscheibe blicken. Es ist nämlich bekannt, daß Spiegelscheiben von Spiegeln kein hundertprozentiges Reflexionsvermögen haben, sondern auch eine gewisse Durchlässigkeit zeigen.

Erfindungsgemäß ist jedoch die Spiegelschicht der Spiegelscheibe in einem Bereich vor der Bildaufnahmevorrichtung zumindest teilweise entfernt, um eine örtlich höhere Durchlässigkeit der Spiegelscheibe zu erzielen. Diese Entfernung der Spiegelschicht kann beispielsweise in Form von dünnen, zueinander im wesentlichen parallelen Streifen oder in Form von kleinen einzelnen Punkten erfolgen. Wird die Spiegelschicht auf diese Weise teilweise oder partiell entfernt, wird das Rückspiegelvermbgen des Rückspiegels nur unwesentlich eingeschränkt, jedoch eine deutlich höhere örtliche Durchlässigkeit der Spiegelscheibe erzielt. Die Entfernung der Spiegelschicht kann beispielsweise über einen Laser, einen Ätz- oder einen Ritzvorgang oder auch eine entsprechende Maskierung beim Aufbringen der Spiegelschicht erfolgen.

Unter "Bildaufnahmevorrichtung" versteht die vorliegende Erfindung im weitesten Sinn ein auf in einem bestimmten Wellenlängenbereich einfallende Strahlung ansprechendes Element oder eine hierauf ansprechende Vorrichtung, mittels dem oder der die einfallende Strahlung in ein darstell- und sichtbares Bild umgewandelt werden kann.

In einem konkreten Ausführungsbeispiel und gemäß einer bevorzugten Ausführungsform der vorliegenden Erfindung ist die Bildaufnahmevorrichtung eine Kamera. Hierdurch ist es möglich, ein von der Kamera aufgenommenes Bild beispielsweise auf einem Monitor in oder auf dem Armaturenbrett des Kraftfahrzeuges darzustellen. Da hierbei die Bildaufnahmevorrichtung bzw. die Kamera eine unterschiedliche Blickrichtung zu der Ebene der Spiegelscheibe haben kann, ist die Kamera in der Lage, ein Bild aus einem unterschiedlichen Wiedergabebereich aufzunehmen und darzustellen. Der Fahrer des Fahrzeuges sieht somit einen Teilbereich der hinter und/oder seitlich dem Fahrzeug liegenden Umgebung in der Spiegelflache des Rückspiegels und einen anderen seitlich und/oder hinter dem Fahrzeug liegenden Umgebungsbereich auf dem Monitor, wie er von der im Spiegel integrierten Bildaufnahmevorrichtung erfaßt wird. Der erfindungsgemäße Rückspiegel vereinigt somit quasi zwei Rückspiegel in einem, ohne daß hierbei jedoch die Größe der Spiegelfläche und/oder Anzahl der Spiegelflächen erhöht werden muß.

Die Blickrichtung der Bildaufnahmevorrichtung kann zu der Ebene der Spiegelscheibe stark unterschiedlich sein. So kann beispielsweise die Bildaufnahmevorrichtung im rechten Winkel zur Spiegelscheibe nach unten gerichtet sein, um es dem Fahrer des Fahrzeuges zu ermöglichen, den Bereich vorder- und hinterhalb der Vorderachse zu überwachen; die verbleibenden Bereiche seitlich und/oder hinter dem Fahrzeug werden über die Spiegelscheibe betrachtet.

Die Bildaufnahmevorrichtung, welche - wie erwähnt - bevorzugt in Form einer Kamera und hier insbesondere einer CCD-Kamera ausgebildet ist, kann entweder im Bereich des sichtbaren Lichts oder auch im Bereich des infraroten Lichts empfindlich sein. Wird hierbei der Kamera wenigstens ein strahlungsemittierendes Element im entsprechenden Wellenlängenbereich zugeordnet, lassen sich speziell bei schlechten Sichtverhältnissen (Nacht, Nebel, starker Regen etc.) verbesserte Sichtverhältnisse über die Bildaufnahmevorrichtung oder Kamera erzielen. Speziell bei im Bereich des infraroten Lichts empfindlichen Bildaufnahmevorrichtungen kann mittels einer im Infrarotbereich emittierenden Lampe oder Leuchtdiode(n) als strahlungsemittierendes Blement ohne Beeinträchtigung, das heißt z.B. Blendung der Umgebung für ein hinreichend klares und gut ausgeleuchtetes Sichtfeld gesorgt werden.

Bevorzugt wird das wenigstens eine strahlungsemittierende Element beim Einschalten der Kamera automatisch mit eingeschaltet.

Die Blickrichtung der Bildaufnahmevorrichtung ist bevorzugt änderbar und hier insbesondere ferngesteuert änderbar. Hierdurch ist es möglich, beispielsweise über einen Steuerhebel in Form eines sogenannten Joystick die Blickrichtung der Bildaufnahmevorrichtung oder Kamera vom Fahrersitz aus zu ändern. Die vom Fahrer jeweils gewünschte oder benötigte Blickrichtung läßt sich hierdurch rasch einstellen und beispielsweise bei einem Fahrerwechsel ebenso rasch modifizieren.

Wie bereits erwähnt, ist die Bildaufnahmevorrichtung mit einer Bildauswerte- und -darstellungsvorrichtung verbunden, um beispielsweise auf einem Monitor in oder auf dem Armaturenbrett das von der Bildaufnahmevorrichtung erfaßte Bild sichtbar darzustellen.

Es versteht sich weiterhin, daß der Gegenstand der vorliegenden Erfindung gleichermaßen auf einen Rückspiegel zutrifft, der zwei oder mehr Bildaufnahmevorrichtungen oder Kameras enthält, welche jeweils unterschiedliche, entweder fest eingestellte oder auch bevorzugt ferngesteuert änderbare Blickrichtungen haben.

Weitere Einzelheiten, Aspekte und Vorteile der vorliegenden Erfindung ergeben sich aus der nachfolgenden illustrativ und rein exemplarisch zu verstehenden Beschreibung anhand der Zeichnung.

Es zeigt:
Fig. 1 schematisch vereinfacht einen Schnitt durch einen erfindungsgemäßen Rückspiegel; und
Fig. 2 eine ebenfalls schematische Frontansicht auf eine Spiegelscheibe eines erfindungsgemäßen Rückspiegels.

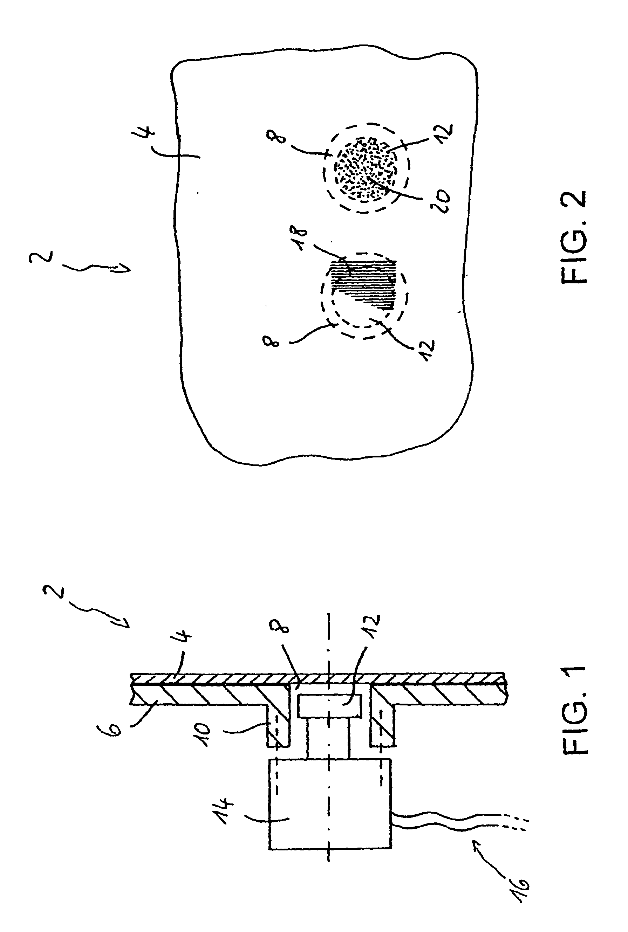

Ein in der Zeichnung insgesamt mit 2 bezeichneter Rückspiegel ist gemäß Fig. 1 aufgebaut aus einer Spiegelscheibe 4 und einer die Spiegelscheibe 4 abstützenden Trägerplatte 6. Spiegelscheibe 4 und Trägerplatte 6 sind an ihren Umfangsrändern mit einer entsprechenden Fassung versehen und in ein Rückspiegelgehäuse eingesetzt. Der Rückspiegel 2 gemäß Fig. 1 ist als sogenannter Vorderflächenspiegel ausgebildet, d.h., die Spiegelscheibe 4 weist die spiegelnde Beschichtung oder den spiegelnden Überzug nicht auf der der Trägerplatte 6 zugewandten Oberfläche, sondern auf der freien Außenoberfläche auf. Ein Beispiel für eine derartige Spiegelscheibe 4 ist eine Spiegelscheibe aus sogenanntem Chrom-Glas.

Wie weiterhin aus Fig. 1 hervorgeht, weist die Trägerplatte 6 zumindest eine Öffnung oder Ausnehmung 8 auf, wobei diese Ausnehmung 8 von einem in das Innere des Rückspiegelgehäuses vorspringenden Sockel 10 umgeben ist. Der Sockel 10 kann umfangsseitig geschlossen ausgeführt sein, oder aus einer Mehrzahl von aus der Ebene der Trägerplatte 6 vorstehenden Laschen bestehen. In dem vom Sockel 10 definierten Innenraum hinter der Spiegelscheibe 4 und innerhalb der Ausnehmung 8 ist der strahlungsaufnehmende Teil 12 einer Bildaufnahmevorrichtung 14 angeordnet. Die Bildaufnahmevorrichtung 14 ist mit ihrem Gehäuse beispielsweise am Sockel 10 befestigt, wie in Fig. 1 durch die gestrichelten Linien veranschaulicht. Von der Bildaufnahmevorrichtung 14 weg bzw. zu dieser hin verläuft eine Mehrzahl von Kabeln oder Signalleitungen 16.

Ist die Bildaufnahmevorrichtung 14 eine Kamera, insbesondere eine CCD-Kamera, entspricht der strahlungsaufnehmende Teil 12 hinter der Spiegelscheibe 4 dem Kameraobjektiv.

In dem in Fig. 1 dargestellten schematischen Veranschaulichungsbeispiel steht die optische Achse der Bildaufnahmevorrichtung 14 oder der Kamera im wesentlichen senkrecht zu der Spiegelscheibe 4. Dies bedeutet, daß die Bildaufnahmevorrichtung oder Kamera 14 im wesentlichen das gleiche Bild empfängt, welches auf der Spiegelscheibe 4 des Rückspiegels 2 reflektiert wird. In der Praxis wird daher die optische Achse der Kamera 14 zur Ebene der Spiegelscheibe 4 abgewinkelt oder geneigt sein, so daß die Kamera 14 ein anderes Bild aufnimmt, als von der Spiegelscheibe 4 reflektiert oder wiedergegeben wird.

Um den an sich schon vorhandenen Strahlungs- oder Lichteinfall auf den strahlungsaufnehmenden Teil oder das Objektiv 12 zu erhöhen, kann gemäß Fig. 2 in einem Bereich vor dem strahlungsaufnehmenden Teil oder dem Objektiv 12 die Spiegelschicht der Spiegelscheibe 4 zumindest teilweise entfernt werden. Dies kann gemäß dem linken Teil von Fig. 2 durch eine Mehrzahl von dünnen, im wesentlichen zueinander parallel verlaufenden Streifen 18 erfolgen, oder in Form von einer Vielzahl von kleinen Punkten 20, wie im rechten Teil von Fig. 2 gezeigt. Durch diese teilweise oder partielle Entfernung der Spiegelschicht von der Spiegelscheibe 4 wird die Durchlässigkeit der Spiegelscheibe 4 vor dem strahlungsaufnehmenden Teil oder dem Objektiv 12 weiter verbessert, ohne daß hierbei das Reflexionsvermögen bzw. das Erscheinungsbild des auf der Spiegelscheibe 4 dargestellten reflektierten Bildes wesentlich beeinträchtigt wird.

Zum Entfernen der Spiegelschicht von der Spiegelscheibe 4 kann ein Laser, ein Ätzvorgang oder auch ein Ritzvorgang zur Anwendung gelangen.

Im in Fig. 1 gezeigten Ausführungsbeispiel fällt die optische Achse der Bildaufnahmevorrichtung oder Kamera 14 mit einer in Fig. 1 strichpunktiert dargestellten Achse zusammen, welche zur Oberfläche der Spiegelscheibe 4 im wesentlichen senkrecht steht. Wie bereits erläutert, ist vorteilhafterweise die optische Achse der Bildaufnahmevorrichtung oder Kamera 14 von einer darart senkrecht zur Oberfläche der Spiegelscheibe 4 verlaufenden Achse abweichend, um eine unterschiedliche Blickrichtung über die Bildaufnahmevorrichtung oder Kamera 14 zu erhalten, welche von demjenigen Bild oder derjenigen Blickrichtung abweicht, welches oder welche über die Spiegelscheibe 4 erhaltbar ist. So kann beispielsweise auch die Bildaufnahmevorrichtung im rechten Winkel zur Spiegelscheibe nach unten gerichtet sein, um es dem Fahrer des Fahrzeuges zu ermöglichen, beispielsweise den Bereich vorder- und hinterhalb der Vorderachse zu überwachen; die verbleibenden Bereiche seitlich und/oder hinter dem Fahrzeug werden über die Spiegelscheibe betrachtet. Auch kann die Blickrichtung der Bildaufnahmevorrichtung in Fahrtrichtung oder annähernd in Fahrtrichtung weisen.

In einer vorteilhaften Ausführungsform kann die Anordnung der Bildaufnahmevorrichtung 14 hinter der Spiegelscheibe 4 im Inneren des Rückspiegelgehäuses auch derart erfolgen, daß die optische Achse oder Blickrichtung der Bildaufnahmevorrichtung 14 einstell- oder änderbar ist. Hierbei erfolgt besonders bevorzugt die Einstellung oder Änderung der optischen Achse oder Blickrichtung der Bildaufnahmevorrichtung 14 ferngesteuert über einen oder mehrere Motore, welche das Gehäuse der Bildaufnahmevorrichtung 14 antreiben und Schwenk- oder Drehbewegungen desselben ermöglichen. Die Ansteuerung der Motore kann vom Fahrer des Kraftfahrzeuges über entsprechende Tasten oder einen Joystick-ähnlichen Wahlhebel erfolgen.

Alternativ hierzu oder zusätzlich hierzu kann auch eine Mehrzahl von Bildaufnahmevorrichtungen 14 mit unterschiedlichen Blickrichtungen fest oder auch einstellbar/beweglich in dem Rückspiegelgehäuse angeordnet sein.

Das von der Bildaufnahmevorrichtung oder der Kamera 14 erzeugte Bild wird auf einem Monitor im oder auf dem Instrumentenbrett des Kraftfahrzeuges dargestellt. Wird eine Mehrzahl von Bildaufnahmevorrichtungen oder Kameras verwendet, können die unterschiedlichen Bilder entweder abwechselnd oder durch eine Bild-in-Bild-Technik auf dem Monitor dargestellt werden.

Um insbesondere bei schlechten Sichtverhältnissen, beispielsweise bei Nacht, Nebel oder dergleichen über die Bildaufnahmevorrichtung oder Kamera 14 ein besseres Bild zu erhalten, arbeitet die Bildaufnahmevorrichtung bevorzugt mit einem oder mehreren strahlungsemittierenden Elementen zusammen, welches oder welche am Rückspiegelgehäuse oder auch hinter der Spiegelscheibe 4 angeordnet ist oder sind. Weitere strahlungsemittierende Elemente können beispielsweise im Heckbereich des Kraftfahrzeuges angeordnet sein. Die strahlungsemittierenden Elemente können beispielsweise in Form einer Leuchtdiode oder mehreren Leuchtdioden oder auch einer oder mehreren Lampen ausgebildet sein, wobei die Wellenlänge der von den strahlungsemittierenden Elementen abgegebenen Strahlung bevorzugt so gewählt wird, daß sie mit dem maximalen Empfindlichkeitsbereich der Bildaufnahmevorrichtung zusammenpaßt. Das oder die strahlungsemittierenden Elemente (LEDs etc.) werden bevorzugt beim Einschalten der Kamera automatisch mit eingeschaltet. Hierzu kann ein Helligkeitssensor vorhanden sein, der ab einem bestimmten Dämmerungswert entscheidet, daß das oder die strahlungsemittierenden Elemente zugeschaltet werden müssen. Der Ansprech-Schwellenwert des Sensors ist bevorzugt einstellbar, um eine subjektive, fahrerspezifische Einschaltung des oder der strahlungsemittierenden Elemente zu haben.

Was die Anordnung der strahlungsemittierenden Elemente hinter der Spiegelscheibe 4 des Rückspiegels 2 betrifft, so sei auf die parallele deutsche Patentanmeldung der selben Anmelderin mit dem Titel "Rückspiegel" (Aktenzeichen 19902487.1-51) verwiesen.

Ist die Bildaufnahmevorrichtung oder Kamera 14 in dem Rückspiegel 2 insbesondere im Infrarotbereich empfindlich und werden als strahlungsemittierende Elemente IR-Dioden verwendet, kann ohne Beeinträchtigung, d.h. beispielsweise Blendung der Umgebung eine ausreichende Ausleuchtung und Beobachtung von Bereichen seitlich, vor oder hinter dem Kraftfahrzeug erfolgen.

Durch die Anordnung der Bildaufnahmevorrichtung oder der Bildaufnahmevorrichtungen im Inneren des Rückspiegelgehäuses ist oder sind diese vor Witterungseinflüssen zuverlässig geschützt.

## Patentansprüche

1. Rückspiegel, insbesondere für Kraftfahrzeuge, mit einer Spiegelscheibe (4), die eine Spiegelschicht aufweist und wenigstens einer hinter der Spiegelscheibe (4) angeordneten Bildaufnahmevorrichtung (14), **dadurch gekennzeichnet, daß** die Spiegelschicht der Spiegelscheibe (4) in einem Bereich vor der Bildaufnahmevorrichtung (14) zumindest teilweise entfernt ist.

2. Rückspiegel nach Anspruch 1, **dadurch gekennzeichnet, daß** die Bildaufnahmevorrichtung (14) durch die Spiegelscheibe (4) blickt.

3. Rückspiegel nach Anspruch 1 oder 2, **dadurch gekennzeichnet, daß** die Bildaufnahmevorrichtung (14) eine Kamera, insbesondere eine CCD-Kamera ist.

4. Rückspiegel nach Anspruch 3, **dadurch gekennzeichnet, daß** die Kamera im Bereich des sichtbaren Lichts empfindlich ist.

5. Rückspiegel nach Anspruch 3, **dadurch gekennzeichnet, daß** die Kamera im Bereich des infraroten Lichts empfindlich ist.

6. Rückspiegel nach Anspruch 4 oder 5, **dadurch gekennzeichnet, daß** der Kamera wenigstens ein strahlungsemittierendes Element im entsprechenden Wellenlängenbereich zugeordnet ist.

7. Rückspiegel nach Anspruch 6, **dadurch gekennzeichnet, daß** das strahlungsemittiernde Element eine Lampe oder eine Leuchtdiode ist.

8. Rückspiegel nach Anspruch 6 oder 7, **dadurch gekennzeichnet, daß** das wenigstens eine strahlungsemittierende Element beim Einschalten der Kamera mit eingeschaltet wird.

9. Rückspiegel nach einem der vorhergehenden Ansprüche, **dadurch gekennzeichnet, daß** die Spiegelschicht der Spiegelscheibe (4) vor der Bildaufnahmevorrichtung (14) in Form von dünnen, zueinander im wesentlichen parallelen Streifen (18) entfernt ist.

10. Rückspiegel nach einem der vorhergehenden Ansprüche,, **dadurch gekennzeichnet, daß** die Spiegelschicht der Spiegelscheibe (4) vor der Bildaufnahmevorrichtung (14) in Form von einzelnen kleinen Punkten (20) entfernt ist.

11. Rückspiegel nach einem der vorhergehenden Ansprüche, **dadurch gekennzeichnet, daß** die Spiegelschicht durch einen Laser abgetragen wird.

12. Rückspiegel nach einem der Ansprüche 1 bis 10, **dadurch gekennzeichnet, daß** die Spiegelschicht durch einen Ätzvorgang abgetragen wird.

13. Rückspiegel nach einem der Ansprüche 1 bis 10, **dadurch gekennzeichnet, daß** die Spiegelschicht durch einen Ritzvorgang abgetragen wird.

14. Rückspiegel nach einem der Ansprüche 1 bis 13, **dadurch gekennzeichnet, daß** die Blickrichtung der Bildaufnahmevorrichtung (14) änderbar, insbesondere ferngesteuert änderbar ist.

15. Rückspiegel nach einem der vorhergenden Ansprüche, **dadurch gekennzeichnet, daß** die Bildaufnahmevorrichtung (14) eine von der Reflektionsebene der Spiegelschicht abweichende Blickrichtung hat.

16. Rückspiegel nach einem der Ansprüche 1 bis 15, **dadurch gekennzeichnet, daß** die Bildaufnahmevorrichtung (14) mit einer Bildauswerte- und -darstellungsvorrichtung verbunden ist.

## Claims

1. A rearview mirror, in particular for motor vehicles, having a mirror pane (4) which comprises a reflective mirror coating and at least one imaging device (14) arranged behind the mirror pane (4), **characterized in that** the reflective mirror coating of the mirror pane (4) is at least partly removed in one area in front of the imaging device (14).

2. A rearview mirror in accordance with Claim 1, **characterized in that** the imaging device (14) views through the mirror pane (4).

3. A rearview mirror in accordance with Claim 1 or 2, **characterized in that** the imaging device (14) is a camera, in particular a CCD camera.

4. A rearview mirror in accordance with Claim 3, **characterized in that** the camera is sensitive in the range of visible light.

5. A rearview mirror in accordance with Claim 3, **characterized in that** the camera is sensitive in the range of infrared light.

6. A rearview mirror in accordance with Claim 4 or 5, **characterized in that** at least one radiation emitting element in the corresponding wavelength range is associated with the camera.

7. A rearview mirror in accordance with Claim 6, **characterized in that** the radiation emitting element is a lamp or a light emitting diode.

8. A rearview mirror in accordance with Claim 6 or 7, **characterized in that** the at least one radiation emitting element is jointly activated upon activation of the camera.

9. A rearview mirror in accordance with any one of the foregoing claims, **characterized in that** the reflective mirror coating of the mirror pane (4) is removed in front of the imaging device in the form of thin, essentially parallel strips (18).

10. A rearview mirror in accordance with any one of the foregoing claims, **characterized in that** the reflective mirror coating of the mirror pane (4) is removed in front of the imaging device in the form of single small dots (20).

11. A rearview mirror in accordance with any one of the foregoing claims, **characterized in that** the reflective mirror coating is stripped by means of a laser.

12. A rearview mirror in accordance with any one of claims 1 to 10, **characterized in that** the reflective mirror coating is stripped by means of an etching process.

13. A rearview mirror in accordance with any one of claims 1 to 10, **characterized in that** the reflective mirror coating is stripped by means of a scribing process.

14. A rearview mirror in accordance with any one of claims 1 to 13, **characterized in that** the direction of view of the imaging device (14) is changeable, in particular changeable by remote control.

15. A rearview mirror in accordance with any one of the foregoing claims, **characterized in that** the imaging device (14) has a direction of view that is different from the plane of reflection of the reflective mirror coating.

16. A rearview mirror in accordance with any one of claims 1 to 15, **characterized in that** the imaging device (14) is connected to an image evaluation and display device.

## Revendications

1. Rétroviseur, en particulier pour des véhicules, comprenant une glace (4) qui présente une couche réfléchissante et au moins un dispositif de prise de vue (14) disposé derrière la glace (4), **caractérisé en ce que** la couche réfléchissante de la glace (4) est éliminée en moins en partie dans une zone située devant le dispositif de prise de vue (14).

2. Rétroviseur selon la revendication 1, **caractérisé en ce que** le dispositif de prise de vue (14) regarde à travers la glace (4).

3. Rétroviseur selon la revendication 1 ou 2, **caractérisé en ce que** le dispositif de prise de vue (14) est une caméra, en particulier une caméra à dispositif de transfert de chargement.

4. Rétroviseur selon la revendication 3, **caractérisé en ce que** la caméra est sensible dans la zone de la lumière visible.

5. Rétroviseur selon la revendication 3, **caractérisé en ce que** la caméra est sensible dans la zone de la lumière infrarouge.

6. Rétroviseur selon la revendication 4 ou 5, **caractérisé en ce qu'**il est associé à la caméra au moins un élément émettant un rayonnement dans la gamme d'ondes correspondante.

7. Rétroviseur selon la revendication 6, **caractérisé en ce que** l'élément émettant un rayonnement est une lampe ou une diode électroluminescente.

8. Rétroviseur selon la revendication 6 ou 7, **caractérisé en ce qu'**un des éléments émettant un rayonnement est enclenché lors de l'enclenchement de la caméra.

9. Rétroviseur selon l'une des revendications précédentes, **caractérisé en ce que** la couche réfléchissante de la glace (4) est située devant le dispositif de prise de vue (14) est éliminée sous la forme de bandes (18) minces, sensiblement parallèles les unes aux autres.

10. Rétroviseur selon l'une des revendications précédentes, **caractérisé en ce que** la couche réfléchissante de la glace (4) située devant le dispositif de prise de vue (14) est éliminée sous forme de petits points (20) individuels.

11. Rétroviseur selon l'une des revendications précédentes, **caractérisé en ce que** la couche réfléchissante est enlevée par un laser.

12. Rétroviseur selon l'une des revendications 1 à 10, **caractérisé en ce que** la couche réfléchissante est enlevée par un procédé de gravure.

13. Rétroviseur selon l'une des revendications 1 à 10, **caractérisé en ce que** la couche réfléchissante est enlevée par un procédé de rayure.

14. Rétroviseur selon l'une des revendications 1 à 13, **caractérisé en ce que** la direction de visée du dispositif de prise de vue (14) peut être modifiée, en particulier modifiée à distance.

15. Rétroviseur selon l'une des revendications précédentes, **caractérisé en ce que** le dispositif de prise de vue (14) présente une direction de visée s'écartant du plan de réflexion de la couche réfléchissante.

16. Rétroviseur selon l'une des revendications 1 à 15, **caractérisé en ce que** le dispositif de prise de vue (14) est relié à un dispositif de restitution et de représentation des prises de vue.
